(19) Europäisches Patentamt
European Patent Office
Office européen des brevets

(11) **EP 2 259 462 A1**

(12) **EUROPEAN PATENT APPLICATION**
published in accordance with Art. 153(4) EPC

(43) Date of publication:
**08.12.2010 Bulletin 2010/49**

(21) Application number: **09725542.6**

(22) Date of filing: **16.03.2009**

(51) Int Cl.:
*H04J 11/00* (2006.01)       *H04J 1/00* (2006.01)
*H04W 72/04* (2009.01)       *H04W 72/12* (2009.01)

(86) International application number:
**PCT/JP2009/055075**

(87) International publication number:
**WO 2009/119372 (01.10.2009 Gazette 2009/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **26.03.2008 JP 2008081844**

(71) Applicant: **NTT DOCOMO, INC.**
**Tokyo 100-6150 (JP)**

(72) Inventor: **MIKI, Nobuhiko**
**Tokyo 100-6150 (JP)**

(74) Representative: **HOFFMANN EITLE**
**Patent- und Rechtsanwälte**
**Arabellastraße 4**
**81925 München (DE)**

(54) **BASIC STATION DEVICE, USER DEVICE AND METHOD IN MOBILE COMMUNICATION SYSTEM**

(57)     Abase station apparatus multiplexes downlink control signals for users depending on user blind detection positions to generate a downlink signal. There are multiple options of radio resource amounts per transmission time interval unit. Letting y=(user specific value) mod (floor($M_B \times C_2$/agg)), the user blind detection positions for a reference option are derived from (y) mod (floor($C_2$/agg)). For an upper option where more radio resources are provided, the user blind detection positions are derived from (y) mod (floor($C_3$/agg)). $C_2$ and $C_3$ are the numbers of channel elements for the respective options, agg is an aggregation level and floor() is a floor function.

FIG.11

**Description**

TECHNICAL FIELD

The present invention relates to a mobile communication system and more particularly a base station apparatus where OFDM (Orthogonal Frequency Division Multiplexing) is applied in downlinks.

BACKGROUND ART

In this type of technical field, W-CDMA standardization organization 3GPP is discussing the next generation communication scheme of the W-CDMA and HSDPA. A typical example of the next generation communication system is LTE (Long Term Evolution). In the LTE, OFDMA (Orthogonal Frequency Division Multiple Access) and SC-FDMA (Single-Carrier Frequency Division Multiple Access) are applied to downlink and uplink radio access schemes, respectively. (See non-patent documents 1 and 2, for example.) Although the LTE is illustratively described below as a matter of descriptive convenience, the present invention is not limited to the system.

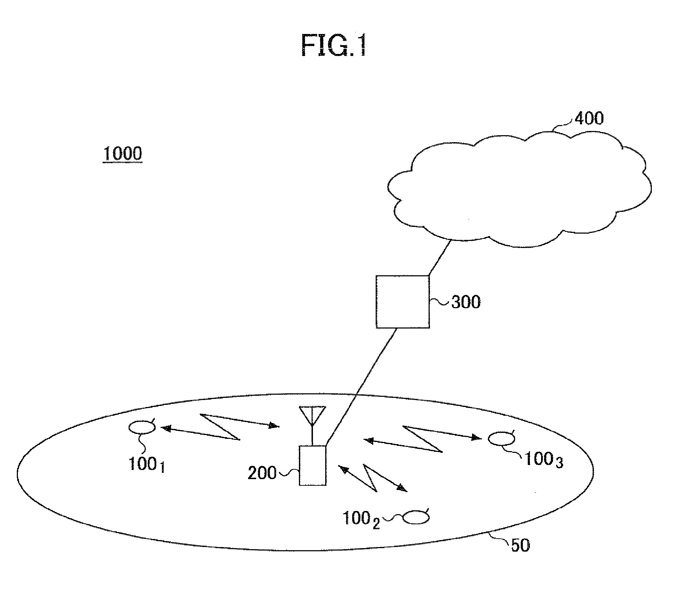

FIG. 1 illustrates a radio communication system using a base station apparatus according to one embodiment of the present invention. A radio communication system 1000 may be an Evolved UTRA and UTRAN (also referred to as LTE (Long Term Evolution) or Super 3G) applied system. The system includes a base station apparatus (eNB: eNode B) 200 and multiple user apparatuses or UE (User Equipment) $100_n$ ($100_1$, $100_2$, $100_3$, ... , $100_n$ where n is a positive integer). The base station apparatus 200 is connected to an upper station such as an access gateway apparatus 300, which is connected to a core network 400. The user apparatuses $100_n$ communicate with the base station apparatus 200 in a cell 50 in accordance with the Evolved UTRA and UTRAN. Although the user apparatuses wirelessly communicate with the base station apparatus, the user apparatuses may include not only mobile terminals but also fixed terminals.

In the radio communication system 1000, the OFDMA and the SC-FDMA are applied to downlinks and uplinks, respectively, as radio access schemes. The OFDMA scheme is a multi-carrier transmission scheme where a frequency band is segmented into multiple narrower frequency bands (subcarriers) to which data is mapped for communication. The SC-FDMA is a single-carrier transmission scheme where a frequency band is segmented for different terminals, which use the different frequency bands to reduce interference between the terminals.

In this type of mobile communication system, one or more physical channels are shared among several mobile stations (user apparatuses) for both uplinks and downlinks in communication. Channels shared among the mobile stations are generally referred to as shared channels, and a PUSCH (Physical Uplink Shared Channel) and a PDSCH (Physical Downlink Shared Channel) are used in the uplinks and the downlinks, respectively, in the LTE. Transport channels mapped to the PUSCH and the PDSCH are referred to as a UL-SCH (Uplink-Shared Channel) and a DL-SCH (Downlink-Shared Channel), respectively.

In a communication system utilizing the shared channels, it is necessary to signal to which mobile stations the shared channels are to be assigned frame-by-frame, and a control channel used for the signaling is referred to as a PDCCH (Physical Downlink Control Channel). The PDCCH may be also referred to as a DL L1/L2 (Downlink L1/L2) control channel or DCI (Downlink Control Information). The PDCCH may include a DL/UL scheduling grant, a TPC (Transmission Power Control) bit and so on (see non-patent document 3).

More specifically, the DL scheduling grant may include assignment information of downlink resource blocks, an ID of a user apparatus (UE), the number of streams, precoding vector related information, information on a data size and a modulation scheme, HARQ (Hybrid Automatic Repeat reQuest) related information and so on, for example. The DL scheduling grant may be also referred to as DL assignment information, DL scheduling information and so on.

Also, the UL scheduling grant may include assignment information of uplink resource blocks, an ID of a user apparatus (UE), information on a data size and a modulation scheme, uplink transmit power information, demodulation reference signal information and so on, for example.

The PDCCH is mapped to the first one or two or three OFDM symbols of fourteen OFDM symbols, for example, within one subframe. It is specified and transmitted to a mobile station in PCFICH as described below to how many of the first OFDM symbols the PDCCH is mapped.

Also, a PCFICH (Physical Control Format Indicator Channel) and a PHICH (Physical Hybrid ARQ Indicator Channel) are transmitted in the OFDM symbols including the PDCCH.

The PCFICH is a signal for informing a mobile station of the number of OFDM symbols including the PDCCH. The PCFICH may be referred to as a DL L1/L2 control format indicator. The PHICH is a channel for transmitting acknowledgement information on the PUSCH (Physical Uplink Shared Channel). The acknowledgement information may be ACK (Acknowledgement) being a positive response or NACK (Negative Acknowledgement) being a negative response.

In downlinks, the PDCCH, the PCFICH and the PHICH are mapped to the first M symbols within one subframe (M=1, 2 or 3). Then, transmit power control is applied to each of these channels so that the channels can be multiplexed and transmitted efficiently.

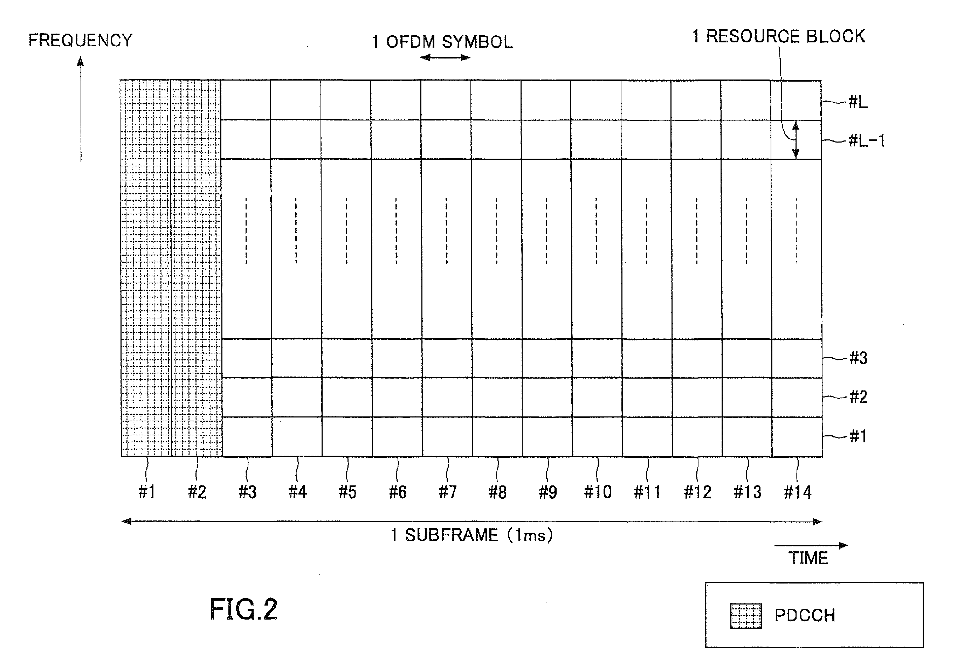

FIG. 2 illustrates an exemplary subframe arrangement. In downlink transmission, one subframe may have 1 ms, and fourteen OFDM symbols may exist in the single subframe, for example. In FIG. 2, numbers in the time axis direction (#1, #2, #3, ..., #14) indicate identification numbers for identifying the OFDM symbols, and numbers in the frequency axis direction (#1, #2, #3, ..., #L-1, #L where L is a positive integer) indicate identification numbers for identifying resource blocks.

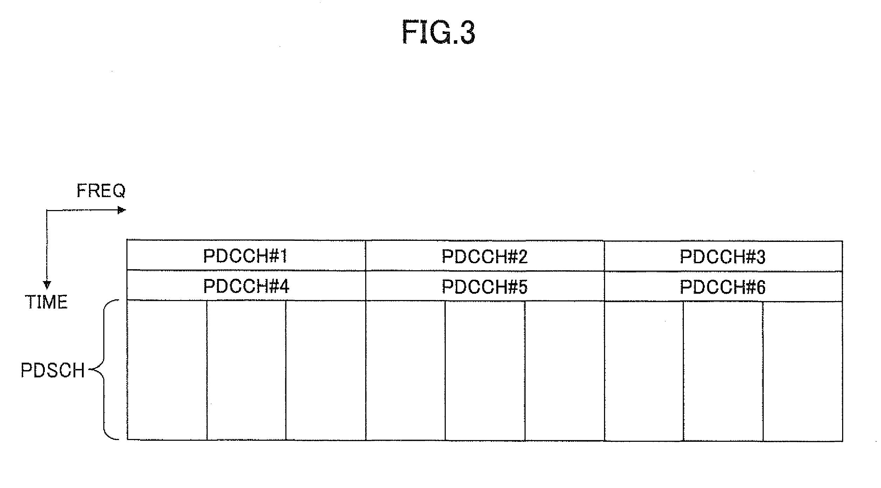

The above-mentioned PDCCH and others are mapped to the first M OFDM symbols in a subframe. The M value is set to 1, 2 or 3. In FIG. 2, the PDCCH is mapped to the first two OFDM symbols, that is, OFDM symbols #1 and #2, in one subframe (that is, M=2). Then, user data, a SCH (Synchronization Channel), a BCH (Physical Broadcast Channel) and/or a persistent scheduling applied data channel are mapped to OFDM symbols other than the PDCCH mapped OFDM symbols. FIG. 3 schematically illustrates that the six PDCCHs are mapped to the first two OFDM symbols. The above-mentioned user data may be IP packets for web browsing, file transfer (FTP), sound packets (VoIP) and others or control signals for RRC (Radio Resource Control). The user data is mapped to the PDSCH as a physical channel and to the DL-SCH as a transport channel.

In the example illustrated in FIG. 2, L resource blocks are arranged in the system band in the frequency direction. Each of the resource blocks has a frequency bandwidth such as 180 kHz, and twelve subcarriers are provided in the single resource block. Also, the total number of resource blocks may be set to 25 in the case of the system bandwidth of 5 MHz, 50 in the case of the system bandwidth of 10 MHz, 100 in the case of the system bandwidth of 20 MHz and so on. As a matter of descriptive convenience, a radio resource identified by a time period for occupying one OFDM symbol and a frequency for occupying one subcarrier is referred to as a resource element (RE).

Upon receiving a downlink signal, a user apparatus demultiplexes a subframe into a control signal and other signals. First, the user apparatus determines the PCFICH value to determine how many OFDM symbols in the subframe are assigned to the control signal. Next, the user apparatus performs blind detection to determine whether there is a control signal destined for itself. In general, the blind detection is performed for each of possible combinations of detection start positions (certain resource elements) and channel coding rates based on error determination results using identification information of the user apparatus (UE-ID).

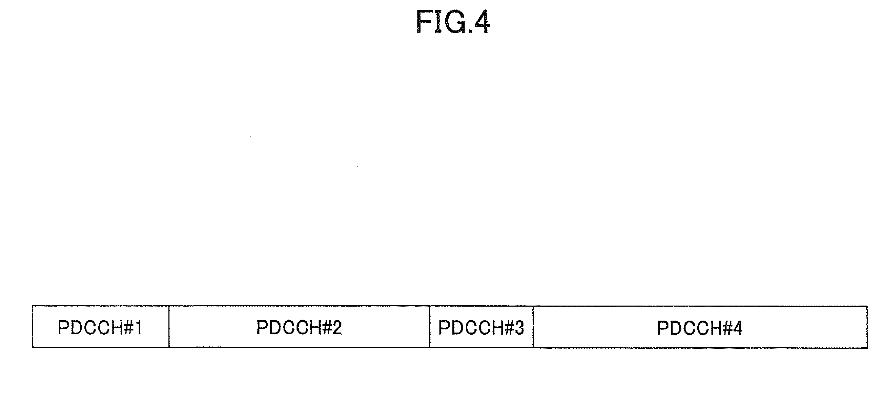

FIG. 4 schematically illustrates that PDCCHs having different channel coding rates are multiplexed into the same subframe. In the illustration, the longer PDCCHs are encoded at lower channel coding rates. For example, PDCCH#2 is encoded at the channel coding rate R/2 lower than the channel coding rate R of the PDCCH#1. Many possible options of the detection start positions and/or the channel coding rates leads to heavier computational complexity of the blind detection, which may increase the burden of the user apparatus.

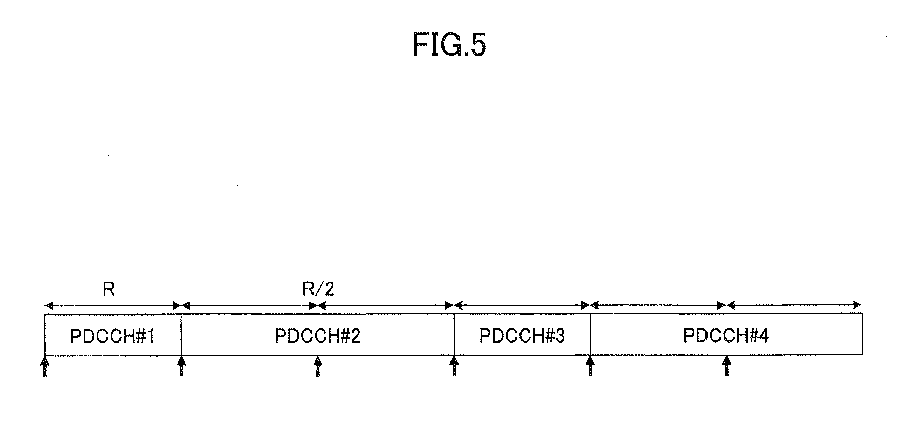

FIG. 5 illustrates how to decrease computational burden of the user apparatus. In the illustrated method, the start position in the blind detection is limited to certain positions as illustrated in upward arrows. In this manner, the number of options of the start positions can be decreased. As a matter of descriptive convenience, start position candidates in the blind detection are set for every predefined number of resource elements, and the predefined number of resource elements are referred to as control channel elements (CCE). In FIG. 5, six control channel elements are illustrated.

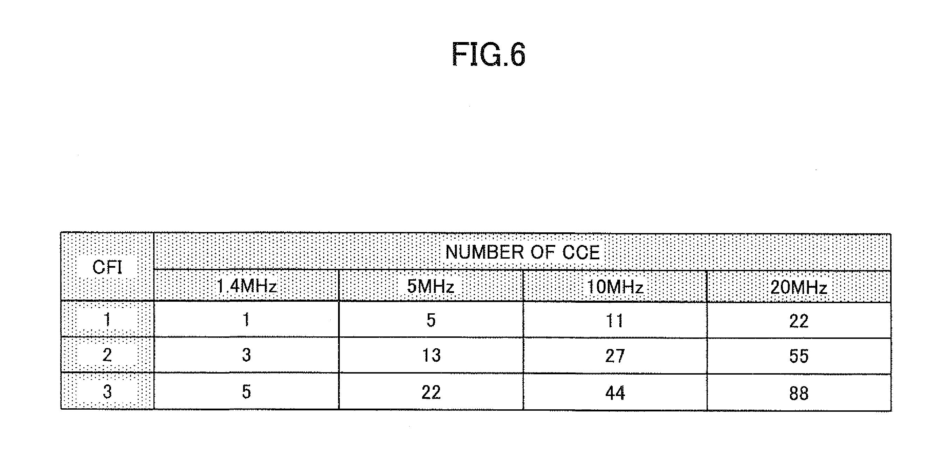

FIG. 6 illustrates the numbers of CCEs included in different system bandwidths (1.4 MHz, 5 MHz, 10 MHz, 20 MHz). In the illustrated example, the number of transmit antennas is set to one or two. The column "CFI" represents PCFICH values, that is, the number of OFDM symbols in one subframe occupied by a control signal.

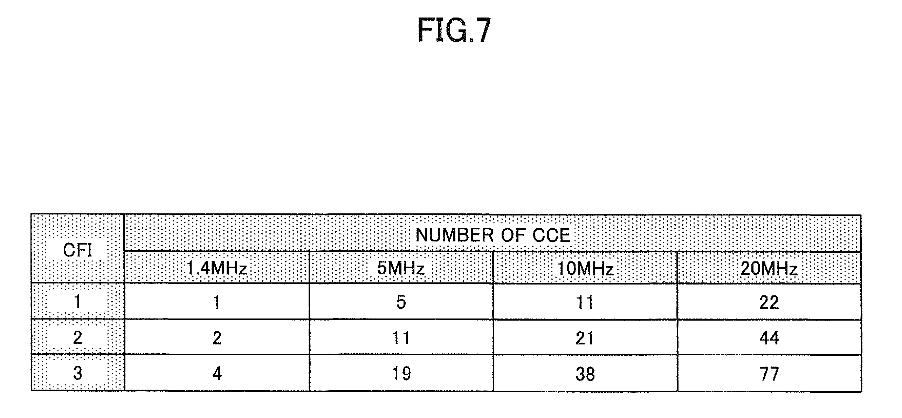

FIG. 7 illustrates the numbers of CCEs included in different system bandwidths (1.4 MHz, 5 MHz, 10 MHz, 20 MHz) as in FIG. 6, but the number of transmit antennas is set to three or four.

As illustrated in FIGS. 6 and 7, the wider the system bandwidth is, the more are the CCEs included therein. In other words, even if the start position is limited in the blind detection by introducing the CCE concept, the user apparatus still would have a heavy computational burden necessary for the blind detection.

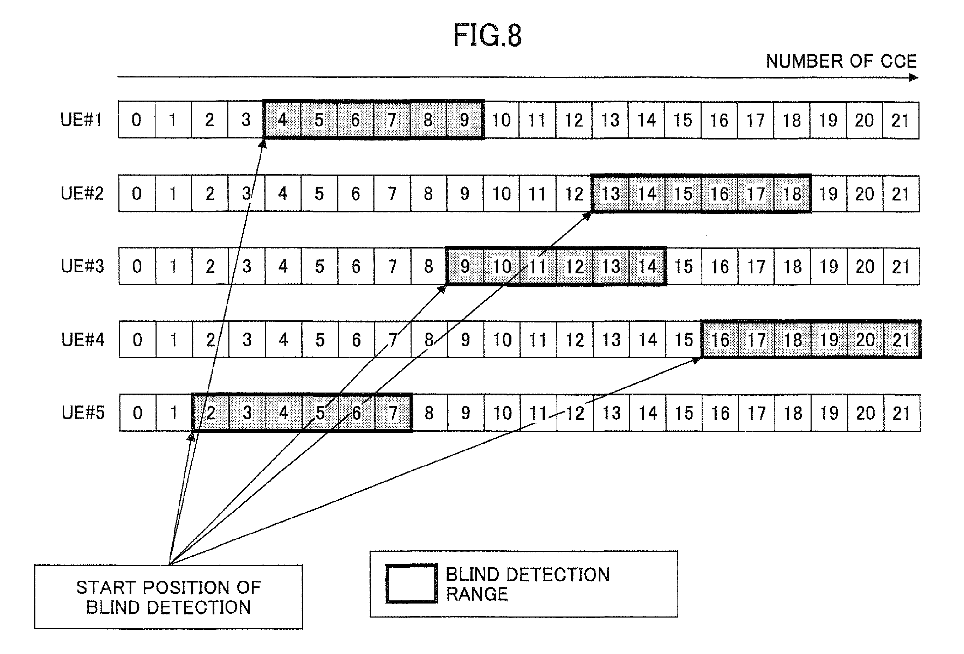

FIG. 8 illustrates how to decrease the computational burden necessary for the blind detection by the user apparatus. In the illustrated method, mapping positions of the control signals is limited to certain CCEs for each user apparatus (UE#1, UE#2, ...), and the possible mapping positions are instead different for the different user apparatuses. For example, the control signal for the first user apparatus UE#1 is mapped to one or more CCEs within the fourth through ninth CCEs, and the control signal for the second user apparatus UE#2 is mapped to one or more CCEs within the thirteenth through eighteenth CCEs. At the user apparatus side, it is enabled to determine the start positions in the blind detection, and each user apparatus can decrease the number of candidates in the blind detection. For example, the first user apparatus UE#1 detects the start position "4" and performs the blind detection on six CCEs following "4". Since the control signal is not mapped to the other positions for the user apparatus UE#1, the user apparatus UE#1 can check only the range to determine the presence of the control signal destined for itself. The start position (Start) in the blind detection may be determined as follows,

$$(Start)=(K*x+L) \ mod \ floor(\#CCE/aggregation\_level),$$

where K and L are some large numbers and preferably are prime numbers.

x is calculated in (UE_ ID+subframe_number) where UE_ID represents a user identifier and subframe_number represents subframe identification (e.g., a subframe number). Thus, x would be a user specific value.

mod represents modulo operation.

floor() represents a floor function returning an integer portion of the argument.

#CCE represents the number of CCEs and differs depending on the CFI (or PCFICH) values.

aggregation_level represents the number of CCEs in one subframe to which the control signal destined for the target user apparatus is mapped. As one example, aggregation_level may be set to 1, 2, 4 or 8.

In this manner, the control signal mapping positions are distributed for different user apparatuses, and the number of candidates in the blind detection are reduced, which can decrease the burden at the user apparatuses.

Non-patent document 1: 3GPP TR 25.814 (V7.0.0), "Physical Layer Aspects for Evolved UTRA", June 2006
Non-patent document 2: 3GPP TS 36.211 (V.8.1.0), "Physical Channels and Modulation", November 2007
Non-patent document 3: 3GPP TS 36.300 (V8.2.0), "E-UTRA and E-UTRAN Overall description", September 2007

DISCLOSURE OF INVENTION

[PROBLEM TO BE SOLVED BY THE INVENTION]

As stated above, the start position (Start) in the blind detection is derived from (K*x+L) mod floor(#CCE/ aggregation_level).

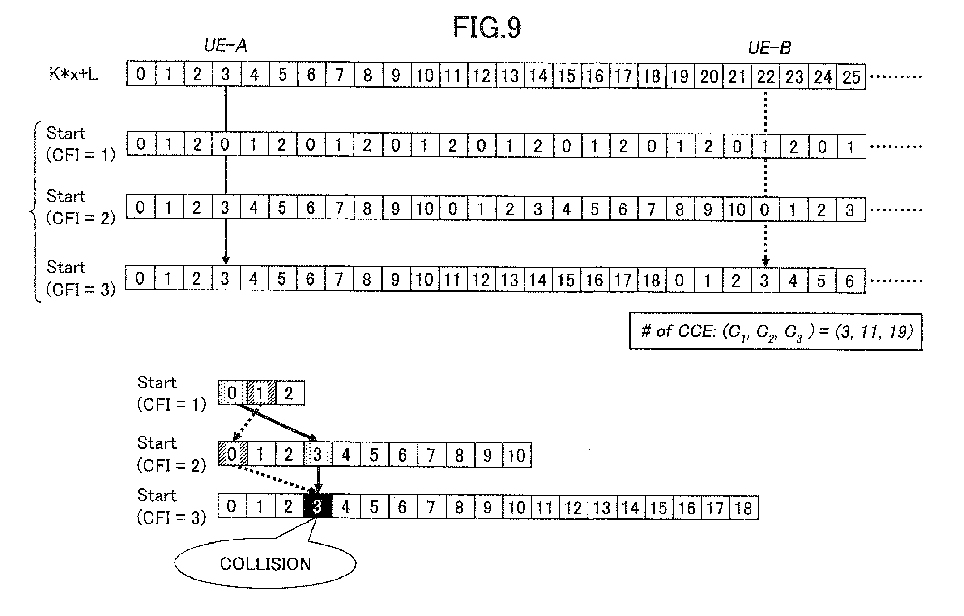

FIG. 9 illustrates (K*x+L) values and start positions (Start) in CFI=1, 2 and 3. As matter of descriptive convenience, it is assumed that #CCE is equal to 3, 11 and 19 for CFI=1, 2 and 3, respectively. Also, it is assumed that aggregation_level is equal to 1. (In other words, the control signal for the object user apparatus is mapped to one CCE.)

In the case of CFI=1, (Start) = (K*x+L) mod (3).

In the case of CFI=2, (Start)= (K*x+L) mod (11).

In the case of CFI=3, (Start)= (K*x+L) mod (19).

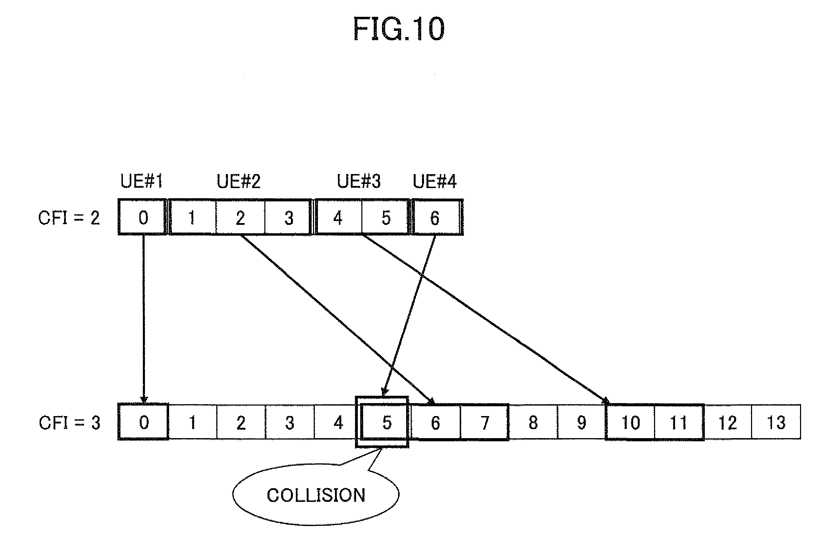

As illustrated in FIG. 8, the (Start) position is represented as a consecutive number associated with the CCE. As a result, if the (K*x+L) value is equal to 3 for a certain user (UE-A), the blind detection start position would become "0" in the case of CFI=1, "3" in the case of CFI=2 and "3" in the case of CFI=3, respectively, for that user. As stated above, the (K*x+L) value is a user specific value. If the (K*x+L) value is equal to 22 for another user (UE-B), the blind detection start position would become "1" in the case of CFI=1, "0" in the case of CFI=2 and "3" in the case of CFI=3, respectively, for that user. As a result, under the case of CFI=3, the control signal for the certain user (UE-A) and the control signal for the user (UE-B) have the same start positions, resulting in collision. FIG. 10 illustrates exemplary collision in mapping of control information for four users having different aggregation_levels.

It is conceived that when such collision occurs, the mapping for one side may be abandoned or resources may be rescheduled for a shared channel. In the former case, the scheduling or the assigned resources becomes wasted for the shared channel of the abandoned side. In this case, the resource would become wasted for the abandoned user in that although the shared channel can be assigned from the viewpoint of the radio transmission state, the control channel cannot be transmitted. In the latter case, the rescheduling leads to longer delay at the base station apparatus.

There is another problem. The CFI (or PCFICH) represents how many of the first OFDM symbols in one subframe (as one example, consisting of fourteen OFDM symbols) are assigned to the control signal (PCFICH, PHICH, PDCCH, RS and so on), and the CFI being equal to 1, 2 or 3 corresponds to the number of OFDM symbols being equal to 1, 2 or 3. Thus, a greater CFI value means more radio resources for the control signal. From the viewpoint of the amount of radio resources, the greater CFI value could multiplex more control signals destined for users. In FIGS. 9 and 10, there is no collision in the case of CFI=2, but the collision occurs in the case of CFI=3. This means that the collision may occur even if more radio resources for the control signals are available, which is not preferable from the viewpoint of efficient utilization of the radio resources.

One object of the present invention is to efficiently utilize the radio resources for downlink control signals in a mobile communication system that transmits the downlink control signal channel-encoded for each user in each transmission time interval.

[MEANS FOR SOLVING THE PROBLEM]

In the following description, reference numbers or reference symbols may be attached to certain terminologies. However, the reference numbers or reference symbols are simply intended to facilitate understandings of the present invention and should not be construed to limit the scope of the present invention.

In one aspect of the present invention, a base station apparatus is used in a mobile communication system where a downlink control signal resulting from user-by-user channel encoding is transmitted per transmission time interval unit. The base station apparatus includes a control signal generation unit configured to channel-encode a signal including radio resource assignment information for a shared channel for each user to generate respective downlink control signals for the users, a multiplexing unit configured to multiplex the respective downlink control signals depending on user blind detection positions to generate a downlink signal and a transmitting unit configured to transmit the downlink signal.

Multiple options of radio resource amounts per transmission time interval unit are provided for the downlink control signals.

Letting y be an integer value less than or equal to a multiple ($M_B \times C_2$/agg) of a reference value being a ratio between a number of channel elements included in radio resources for the downlink control signals for a reference option and an aggregation level derived from a channel coding rate, the user blind detection positions for the reference option are derived from start positions Start(2) resulting from a modulo operation of the y by an integer part of the reference value ($C_2$/agg).

For an upper option wherein more radio resources are provided than those for the reference option, the user blind detection positions are derived from start positions Start(3) resulting from a modulo operation of the y by an integer part of a different reference value ($C_3$/agg) being a ratio between a number of channel elements for the upper option and the aggregation level.

In one embodiment of the present invention, the y may be derived by performing a modulo operation of a value derived from user identification information, a subframe number and a predefined value by an integer part of the multiple of the reference value.

In one embodiment, for a lower option wherein fewer radio resource are provided than those for the reference option, the user blind detection positions may be derived from start positions resulting from a modulo operation of the y by an integer part of a further different reference value being a ratio between a number of channel elements for the lower option and the aggregation level.

In one embodiment, for the upper option, the user blind detection positions may be derived by adding a predefined offset value to the start positions resulting from the modulo operation of the y by the integer part of the different reference value being the ratio between the number of channel elements for the upper option and the aggregation level.

In a base station apparatus according to one aspect of the present invention, multiple options of radio resource amounts per transmission time interval unit are provided for the downlink control signals, and more radio resources are provided for a reference option than those for other options.

Letting y be an integer value less than or equal to an integer part of a reference value ($C_3$/agg) being a ratio between a number of channel elements included in radio resources for the downlink control signals for the reference option and an aggregation level derived from a channel coding rate, the user blind detection positions for the reference option are derived from start positions obtained from the integer value less than or equal to the y.

For a lower option wherein fewer radio resources are provided than those for the reference option, the user blind detection positions are derived from start positions resulting from a modulo operation of the start positions for the reference option by an integer part of a different reference value ($C_2$/agg) being a ratio between a number of channel elements for the lower option and the aggregation level.

In one aspect of the present invention, a user apparatus is used in a mobile communication system where a downlink control signal resulting from user-by-user channel encoding is transmitted per transmission time interval unit. The user apparatus includes a receiving unit configured to receive a downlink signal including the downlink control signal, a control signal decoding unit configured to decode the downlink control signal depending on a user blind detection position for the user apparatus and a communication unit configured to communicate a shared channel depending on a decoding result. Multiple options of radio resource amounts per transmission time interval unit are provided for the downlink control signals.

Letting y be an integer value less than or equal to a multiple ($Mg \times C_2$/agg) of a reference value being a ratio between a number of channel elements included in radio resources for the downlink control signals for a reference option and an aggregation level derived from a channel coding rate, the user blind detection position for the reference option is derived from start positions Start(2) resulting from a modulo operation of the y by an integer part of the reference value.

For an upper option wherein more radio resources are provided than those for the reference option, the user blind detection position is derived from start positions Smart(3) resulting from a modulo operation of the y by an integer part of a different reference value ($C_3$/agg) being a ratio between a number of channel elements for the upper option and the aggregation level.

In a user apparatus according to one embodiment of the present invention, more radio resources are provided for a reference option than those for other options. Letting y be an integer value less than or equal to an integer part of a reference value ($C_3$/agg) being a ratio between a number of channel elements included in radio resources for the downlink control signals for the reference option and an aggregation level derived from a channel coding rate, the user blind detection position for the reference option is derived from start positions obtained from an integer value less than or equal to the y.

For a lower option wherein fewer radio resources are provided than those for the reference option, the user blind detection position is derived from start positions resulting from a modulo operation of the start position for the reference option by an integer part of a different reference value ($C_2$/agg) being a ratio between a number of channel elements for the lower option and the aggregation level.

[ADVANTAGE OF THE INVENTION]

According to the aspect of the present invention, it is possible to efficiently utilize the radio resources for downlink control signals in a mobile communication system that transmits the downlink control signal channel-encoded for each user in each transmission time interval.

BRIEF DESCRIPTION OF DRAWINGS

FIG. 1 schematically illustrates an exemplary mobile communication system;
FIG. 2 illustrates an exemplary subframe arrangement;
FIG. 3 schematically illustrates that the PDCCH and the PDSCH are mapped to a subframe;
FIG. 4 schematically illustrates that PDCCHs having different sizes depending on channel coding rates are used;
FIG. 5 illustrates an exemplary method to decrease computational burden necessary for a user apparatus to perform the blind detection;
FIG. 6 illustrates the numbers of CCEs included in different system bandwidths (1.4 MHz, 5 MHz, 10 MHz, 20 MHz) (the number of transmit antennas is equal to 1 or 2);
FIG. 7 illustrates the numbers of CCEs included in different system bandwidths (1.4 MHz, 5 MHz, 10 MHz, 20 MHz) (the number of transmit antennas is equal to 3 or 4);
FIG. 8 illustrates another exemplary method to decrease computational burden necessary for a user apparatus to perform the blind detection;
FIG. 9 illustrates a problem in the prior art;
FIG. 10 illustrates a problem in the prior art;
FIG. 11 illustrates a first exemplary operation;
FIG. 12 illustrates first details of the first exemplary operation;
FIG. 13 illustrates second details of the first exemplary operation;
FIG. 14 illustrates a second exemplary operation;
FIG. 15 illustrates first details of the second exemplary operation;
FIG. 16 illustrates second details of the second exemplary operation;
FIG. 17 illustrates a base station apparatus according to one embodiment;
FIG. 18 is a flowchart illustrating an exemplary operation of the base station apparatus;
FIG. 19 illustrates a user apparatus according to one embodiment; and
FIG. 20 is a flowchart illustrating an exemplary operation of the user apparatus.

LIST OF REFERENCE SYMBOLS

10:     scheduler
11:     PDCCH generation unit
12:     PHICH generation unit
13:     PCFICH generation unit
14:     control channel mapping unit
15:     mapping table
16:     PDSCH generation unit
17:     multiplexing unit

20:    signal demultiplexing unit
21:    PDCCH demodulation unit
22:    PHICH demodulation unit
23:    PDSCH demodulation unit
24:    PUSCH generation unit

## BEST MODE FOR CARRYING OUT THE INVENTION

For descriptive convenience, the present invention is described in several separated items, but the separation is not essential to the present invention and descriptions of the items may be combined as needed. Specific numerical values are used in the present description in order to facilitate understandings of the present invention. However, unless specifically stated otherwise, these numerical values are illustrative, and any other value may be used.

Embodiments of the present invention are described in terms of items as set forth below.

1. First exemplary operation ($C_3 < 2C_2$)
2. Variation of the first exemplary operation ($2C_2 < C_3$)
3. Second exemplary operation ($C_3 < 2C_2$)
4. Variation of the second exemplary operation ($2C_2 < C_3$)
5. Base station apparatus (eNB)
6. User apparatus (UE)

FIRST EMBODIMENT

[1. First exemplary operation ($C_3 < 2C_2$)]

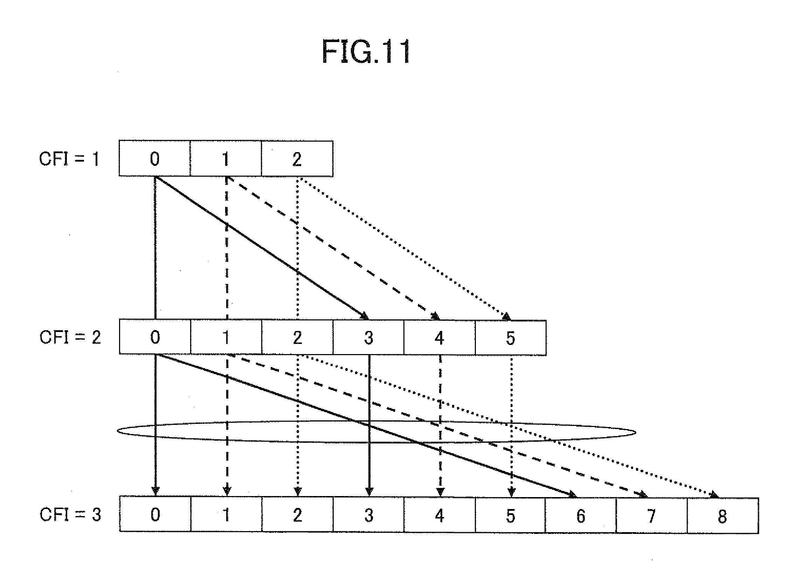

FIG. 11 illustrates the first exemplary operation. In the illustration, numbers within squares represent consecutive numbers associated with CCEs. In practice, a large number of CCEs may be present. In increasing from CFI=1 to CFI=2, "0" under the case of CFI=1 corresponds to "0" or "3" under the case of CFI=2. "1" under the case of CFI=1 corresponds to "1" or "4" under the case of CFI=2. "2" under the case of CFI=1 corresponds to "2" or "5" under the case of CFI=2.

As a result, if control signals are mapped without collision under the case of CFI=1, the control signals would be also mapped without collision under the case of CFI=2. In the illustrated example, twice the total number of CCEs under the case of CFI=1 (=3) is equal to the total number of CCEs under the case of CFI=2 (=6). Thus, if the total number of CCEs are changed into such a multiple, the control signals can be distributed over various CCEs with the same probability.

However, the total number of CCEs may not necessarily have the above relationship for various combinations of CFI values and the system bands. In many cases, the CFI values and the total number of CCEs do not necessarily have a linear relationship. This is due to the fact that radio resources are used for reference signals (RS), PHICHs and so on and that the radio resources available to control signals for a certain user are decreased more than an expected linearly decreased amount. In the illustrated example, if the CFI increases from two to three, the total number of CCEs increases from six to nine. (In the case of CFI=3, the total number of CCEs is not equal to 12.)

In this embodiment, if the control signals can be mapped without collision before the CFI increase even in the above-mentioned case, no collision is ensured after the CFI increase. On the other hand, if the CFI decreases, the radio resources decrease. Accordingly, it is impossible to prevent the collision. (Even in this case, it is considered that there are as few collisions as possible.) In the illustrated example, "0" under the case of CFI=2 corresponds to "0" or "6" under the case of CFI=3. "1" under the case of CFI=2 corresponds to "1" or "7" under the case of CFI=3. "2" under the case of CFI=2 corresponds to "2" or "8" under the case of CFI=3. "3" under the case of CFI=2 corresponds to "3" under the case of CFI=3. "4" under the case of CFI=2 corresponds to "4" under the case of CFI=3. "5" under the case of CFI=2 corresponds to "5" under the case of CFI=3.

In this manner, in the first exemplary operation, any of nine CCEs (0-8) under the case of CFI=3 correspond to one CCE under the case of CFI=2. This means that the blind detection start positions are evenly distributed under the case of CFI=3. In other words, in the case of CFI=3, respective occurrence probabilities of CCE=0, 1, 2, ..., 8 are caused to be evenly equal to P as the blind detection start positions, and if there is no collision under the case of CFI=2, the collision can be prevented even in the case of CFI=3. Instead, in the case of CFI=2, the respective occurrence probabilities of CCE=0, 1, 2, 3, 4, 5 would be equal to 2P, 2P, 2P, P, P, P, respectively, and have no uniform value.

In this embodiment, the blind detection start positions Start (2) and Start (1) in the cases of CFI=2 and CFI=1 are derived based on the blind detection start position Start (3) in the case of CFI=3.

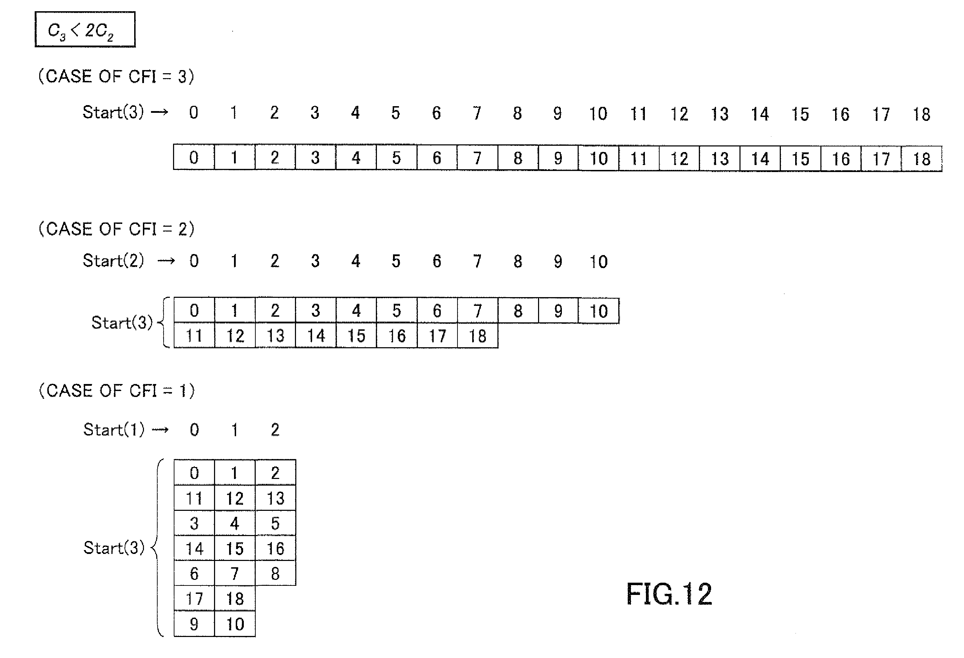

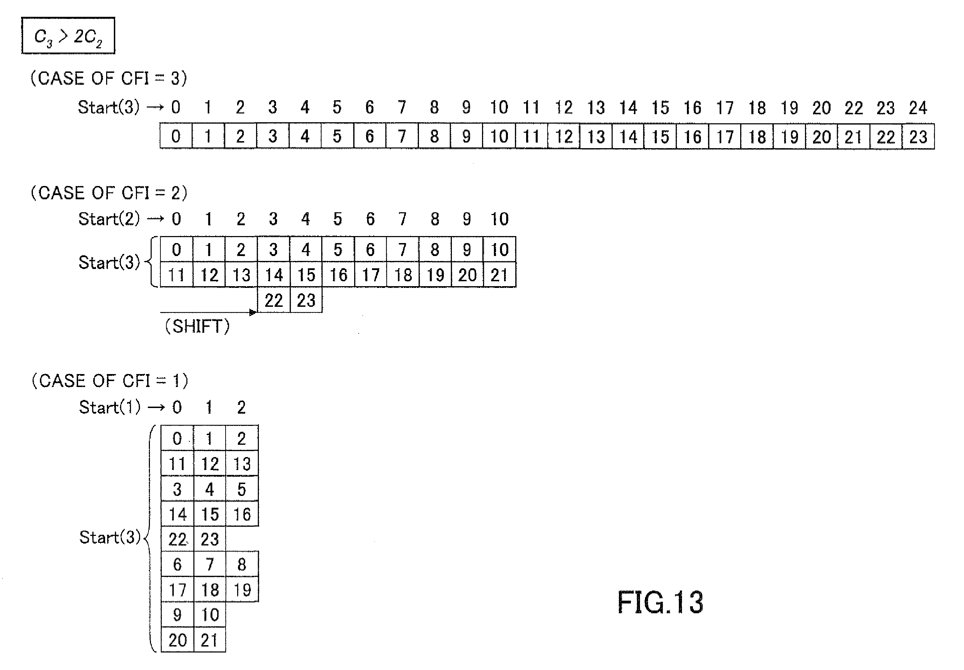

The first exemplary operation is further described below with reference to FIGS. 12 and 13.

FIG. 12 illustrates the first exemplary operation. In this exemplary operation, the blind detection start position Start (3) in the case of CFI=3 is derived as follows,

$$\text{Start(3)} = \text{(K*x+L) mod floor(\#CCE/aggregation\_level)},$$

where K and L are some large numbers and preferably are prime numbers. x is calculated based on UE_ID+subframe_number where UE_ID represents a user identifier and subframe_number represents subframe identification information (e.g., a subframe number). Thus, x would be a user specific value. mod represents modulo operation. floor() represents floor function and returns an integer portion of the argument. #CCE represents the total number of CCEs under the case of CFI (or PCFICH)=3. (In FIG. 12, the total number of CCEs is equal to 19.)

In this manner, the formula is the same as the conventional one for the case of CFI=3. However, the blind detection start position for the cases of CFI=2 and CFI=1 is derived unlike the conventional one. The blind detection start position Start(2) for the case of CFI=2 is calculated as follows,

$$\text{Start(2)} = \text{Start(3) mod (the total number of CCEs in the case of CFI=2).}$$

The blind detection start position Start(1) for the case of CFI=1 is calculated as follows,

$$\text{Start(1)} = \text{Start(2) mod (the total number of CCEs in the case of CFI=1).}$$

In FIG. 12, in the case of CFI=3, the total number $C_3$ of CCEs is equal to 19, and aggregation_level is set to 1 for descriptive simplification. More generally, the value of aggregation_level may be set to 1, 2, 4, 8 and so on. The start position Start(3) calculated based on the above formula is a CCE corresponding to any of 0-18. The value of (K*x+L) is user specific, and accordingly respective user control signals are mapped onto or after the start position corresponding to any of 0-18. (More strictly, the control signals are mapped within a predefined number of CCEs (e.g., six CCEs) on or after the start position. If (K*x+L) is sufficiently large, every value of 0-18 would have an even occurrence probability.

In FIG. 12, in the case of CFI=2, the total number $C_2$ of CCEs is equal to 11. The above nineteen positions (0-18) are associated with these eleven positions (starting points). (Start (2) is derived from Start(3).) By setting the correspondence as illustrated, control signals mapped to 0-10 without collision under the case of CFI=2 can be also mapped without collision under the case of CFI=3.

In FIG. 12, in the case of CFI=1, the total number $C_1$ of CCEs is equal to 3. The above nineteen positions (0-18) are associated with these three positions. (Start (1) is derived from Start(2). As a result, Start (1) is also derived from Start (3).) By setting the correspondence as illustrated, control signals mapped to 0-2 (starting point) without collision under the case of CFI=1 can be also mapped without collision under the cases of CFI=2 and CFI=3.

[2. Variation of the first exemplary operation ($2C_2<C_3$)]

FIG. 13 illustrates a variation of the first exemplary operation. In the exemplary operation illustrated in FIG. 12, $C_3$=19, $C_2$=11 and $C_1$=3. In this variation, $C_3$=25, $C_2$=11 and $C_1$=3. The operation has main parts similar to the above-mentioned exemplary operation, but the present embodiment is different in that the blind detection start position Start (2) is calculated in the case of CFI=2 based on the following formula,

$$\text{Start(2)} = \text{Start(3) mod (the total number of CCEs in the case of CFI=2)+(shift amount).}$$

The blind detection start positions Start (1) and Start (3) for the cases of CFI=1, 3 are derived similar to the above-mentioned exemplary operation.

The shift amount is set to three CCEs in the illustrated example but may be set to different values. However, some limitation is preferred. It is assumed that the shift amount is set to 0 and the blind detection is performed on five CCEs. For example, if the blind detection start position is "0", the user apparatus tries to decode CCEs "0", "1", "2", "3" and "4". Also, if the Start (3) value is equal to "22" for that user apparatus, the user apparatus would try to decode CCEs corresponding to Star (3) being equal to "22", "23", "0", "1" and "2". In this case, "22" and "0" have the same start position Star(2)="0", and "23" and "1" also have the same start position Start(2)="1", which leads to collision. In order to avoid the collision, the above-mentioned shift amount is introduced. If the shift amount is too small, the above-mentioned collision may arise. On the other hand, if the shift amount is too large (the shift amount is as large as $C_2$=11), a similar collision may arise near Start(3)=20. For this reason, the shift amount is preferably equal to about half of $C_2$. Note that such a shift amount may be necessary not only in the case of CFI=2 but also in the case of CFI=1.

[3. Second exemplary operation ($C_3 < 2C_2$)]

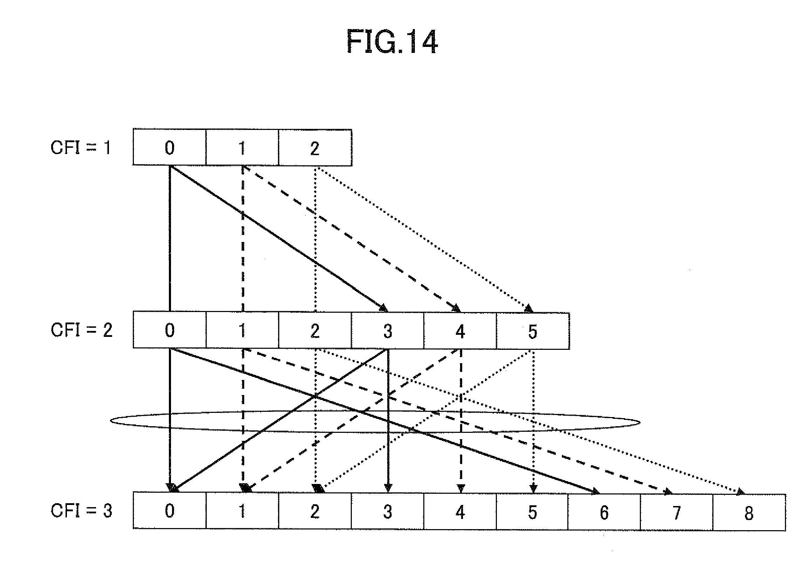

FIG. 14 illustrates the second exemplary operation. In the illustration, numbers in squares represent consecutive numbers associated with CCEs. In practice, a large number of CCEs may be present. In increasing from CFI=1 to CFI=2, if control signals are mapped without collision under the case of CFI=1, the control signals would be also mapped without collision under the case of CFI=2. In the illustrated example, twice the total number of CCEs under the case of CFI=1 (=3) is equal to the total number of CCEs under the case of CFI=2 (=6). Thus, if the total number of CCEs are changed into such a multiple, the control signals can be distributed over various CCEs with the same probability.

However, the total number of CCEs may not necessarily have the above relationship for various combinations of CFI values and the system bands. In this embodiment, if the control signals can be mapped without collision before the CFI increase even in the above-mentioned case, no collision is ensured after the CFI increase. On the other hand, if the CFI decreases, the radio resources decrease. Accordingly, it is impossible to prevent the collision. The above situation is the same as FIG. 11. In the example illustrated in FIG. 14, "0" under the case of CFI=2 corresponds to "0" or "6" under the case of CFI=3. "1" under the case of CFI=2 corresponds to "1" or "7" under the case of CFI=3. "2" under the case of CFI=2 corresponds to "2" or "8" under the case of CFI=3. "3" under the case of CFI=2 corresponds to "3" or "0" under the case of CFI=3. "4" under the case of CFI=2 corresponds to "4" or "1" under the case of CFI=3. "5" under the case of CFI=2 corresponds to "5" or "2" under the case of CFI=3.

In this manner, in the second exemplary operation, in the case of CFI=2, the blind detection start positions are evenly distributed. This is implemented by associating any of nine CCEs (0-8) under the case of CFI=3 with two CCEs under the case of CFI=2. For example, in the case of CFI=2, respective occurrence probabilities of CCE=0, 1, 2, 3, 4 are caused to be evenly equal to P as the blind detection start positions, and if there is no collision under the case of CFI=2, the collision can be prevented even in the case of CFI=3. Instead, in the case of CFI=3, the respective occurrence probabilities of CCEs=0, 1, 2, 3, 4, 5, 6, 7, 8 would be equal to 2P, 2P, 2P, P, P, P, P, P, P, respectively, as the blind detection start positions and have no uniform value.

In this embodiment, the blind detection start positions in the cases of CFI=1 and CFI=3 are derived based on the blind detection start position in the case of CFI=2.

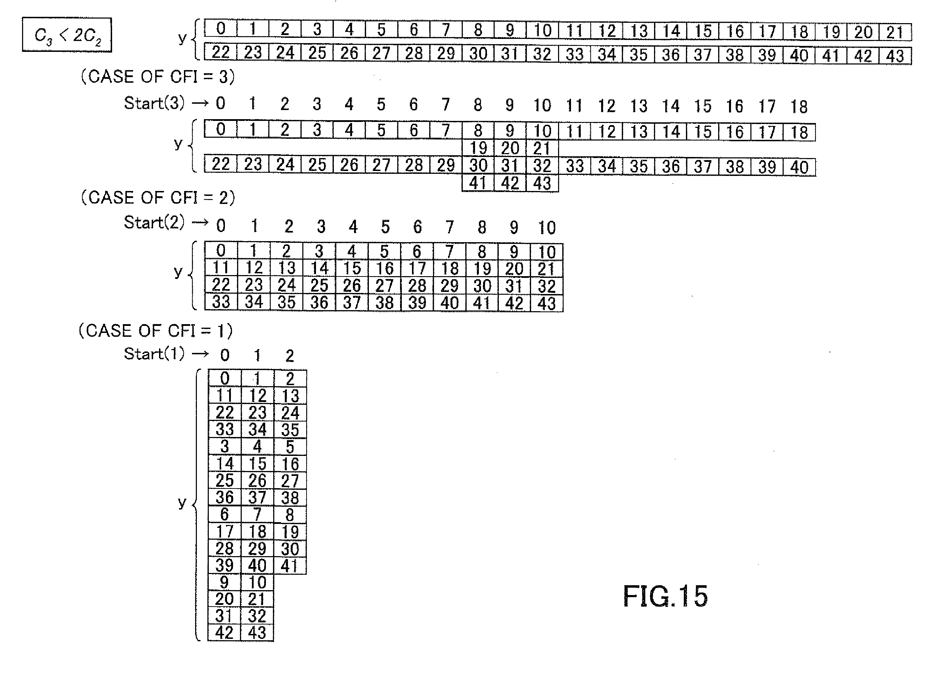

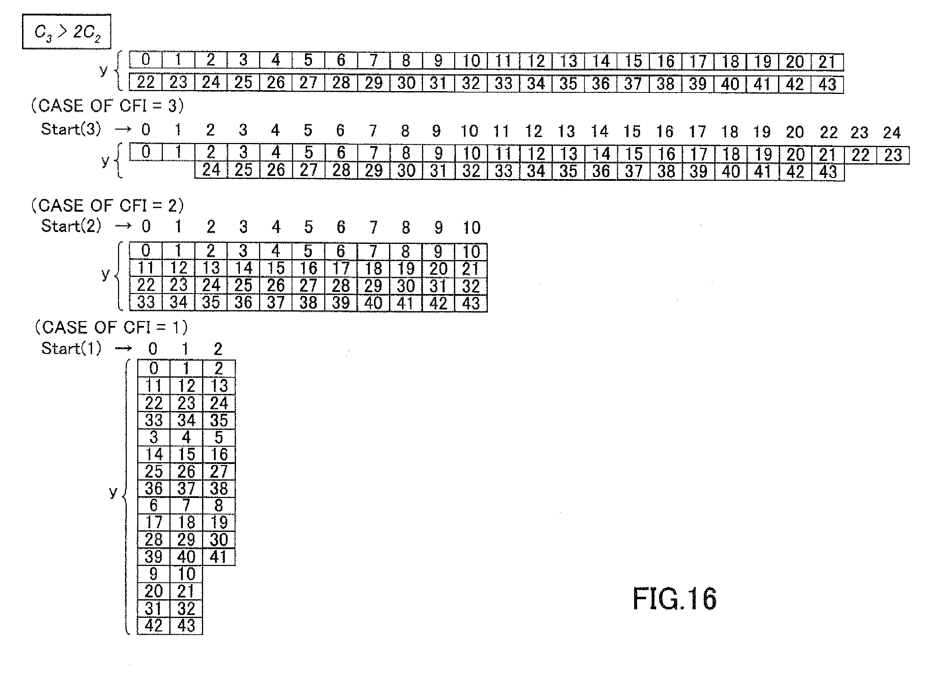

The second exemplary operation is further described below with reference to FIGS. 15 and 16.

FIG. 15 illustrates the second exemplary operation. In this exemplary operation, a certain parameter or sub-parameter y is provided. y is calculated as follows,

$$y = (K*x+L) \bmod floor(M_B \times (the\ total\ number\ of\ CCEs\ in\ the\ case\ of\ CFI=2)/aggregation\_level),$$

where K and L are some large numbers and preferably are prime numbers. x is calculated based on UE_ID+subframe_number where UE_ID represents a user identifier and subframe_number represents subframe identification information (e.g., a subframe number). Thus, x would be a user specific value. mod represents modulo operation. floor () represents floor function and returns an integer portion of the argument. The second exemplary operation is significantly different from the first exemplary operation in that the argument of the floor function includes $M_B$ times the total number of CCEs in the case of CFI=2. As a matter of descriptive convenience, it is assumed that $M_B$=4 and the number of CCEs is equal to 11 in the case of CFI=2. The sub-parameter y becomes an integer value less than or equal to

$$(4 \times (the\ total\ number\ of\ CCEs\ in\ the\ case\ of\ CFI=2)/aggregation\_level).$$

If aggregation_level is equal to 1, the sub-parameter y would be any of 44 integers (0, 1, ..., 43). The blind detection start position Start (2) in the case of CFI=2 is derived as follows,

$$\texttt{Start(2)=y mod (the total number of CCEs in the case of CFI=2).}$$

The total number (44) of different y values is a multiple of (the total number of CCEs in the case of CFI=2)/ aggregation_level). The blind detection start position Start (2) in the case of CFI=2 is derived by associating any of 44 different y values with a certain user and performing a modulo operation on the associated y value by $C_2$ (the total number of CCEs in the case of CFI=2). Start (2) is represented as any of the eleven numbers. According to this numeral relationship $(44=4 \times_{11})$, the blind detection start position Start(2) for a user apparatus will arise among the eleven numbers (0-10) with an even probability. (In FIG. 15, it is graphically illustrated that four y values are evenly associated with different Start(2) candidates 0, 1, 2, ..., 10.)

The blind detection start position Start(3) under the case of CFI=3 is derived as follows,

$$\texttt{Start(3)=y mod (the total number of CCEs in the case of CFI=3) } (0 \leq y \leq 18, \ 22 \leq y \leq 40);$$

and

$$\texttt{Start(3)=y mod (the total number of CCEs in the case of CFI=3)+(shift amount) } (19 \leq y \leq 21, \ 41 \leq y \leq 43),$$

where the shift amount is a similar amount as described in conjunction with FIG. 13. In FIG. 15, the shift amount is set to "8". In the illustrated example, however, y=22-32 correspond to start positions 0-10 in both cases of CFI=2 and CFI=3. For this reason, the shift amount applied y values become 19-21 and 41-43. In the case of CFI=3, two y values are associated with respective start positions Start(3)=0-7 and 11-18. (For example, y=0, 22 for Start(3)=0.) As a result, these start positions have an even occurrence probability. For Start(3)=8, 9, 10, the occurrence probability is high, which means that collision may be likely to arise for these start positions. This is compensation for causing all the eleven start positions to arise with the same probability in the case of CFI=2.

The blind detection start position Start(1) in the case of CF1=1 is derived as follows,

$$\texttt{Start(1)=Start(2) mod (the total number of CCEs in the case of CFI=1).}$$

In FIG. 15, the total number $C_1$ of CCEs is also equal to 3 in the case of CFI=1. The above-mentioned y valuers (0-43) are associated with these three positions. Start (1) is derived from Start (2). As a result, control signals mapped to 0-2 (starting points) without collision in the case of CFI=1 can be mapped without collision in the cases of CFI=2 and CFI=3.

[4. Variation of the second exemplary operation $(2C_2 < C_3)$]

FIG. 16 illustrates a variation of the second exemplary operation. In the exemplary operation illustrated in FIG. 15, $C_3$=19, $C_2$=11 and $C_1$=3. In this variation, $C_3$=25, $C_2$=11 and $C_1$=3. The operation has main parts similar to the above-mentioned exemplary operation, but the present embodiment is different in that the blind detection start position Start(3) is calculated in the case of CFI=3 based on the following formula,

$$Start(3) = y \bmod (\text{the total number of CCEs in the case of CFI=3}) + (\text{shift amount}).$$

The blind detection start positions Start (2) and Start (1) for the cases of CFI=2, 1 are derived similar to the above-mentioned exemplary operation.

In the illustrated example, since control signals can be mapped without collision for y=0-10 in the case of CFI=2, it is taken into account that no collision can arise in the case of CFI=3. This can be realized by simply associating y with Start(3) in ascending order. Likewise, it is taken into account that no collision can arise for y=11-21 in the cases of CFI=2 and CFI=3. Also, it is taken into account that no collision can arise for y=23-32 in the cases of CFI=2 and CFI=3. y=22, 23 correspond to Start (3)=23, 24. If the start position Start(3) is determined in the ascending order, y=24, 25, 26, ... may be associated with Start(3)=0, 1, 2, .... In such a case, however, when the CFI value is increased from two to three, collision may arise. Thus, the above-mentioned shift amount is introduced to maintain the relationship between y and the start position in the case of CFI=2 for y values subsequent to y=24. As a result, it is possible to avoid raising the probability of the collision arising due to the CFI increase.

[5. Base station apparatus (eNB)]

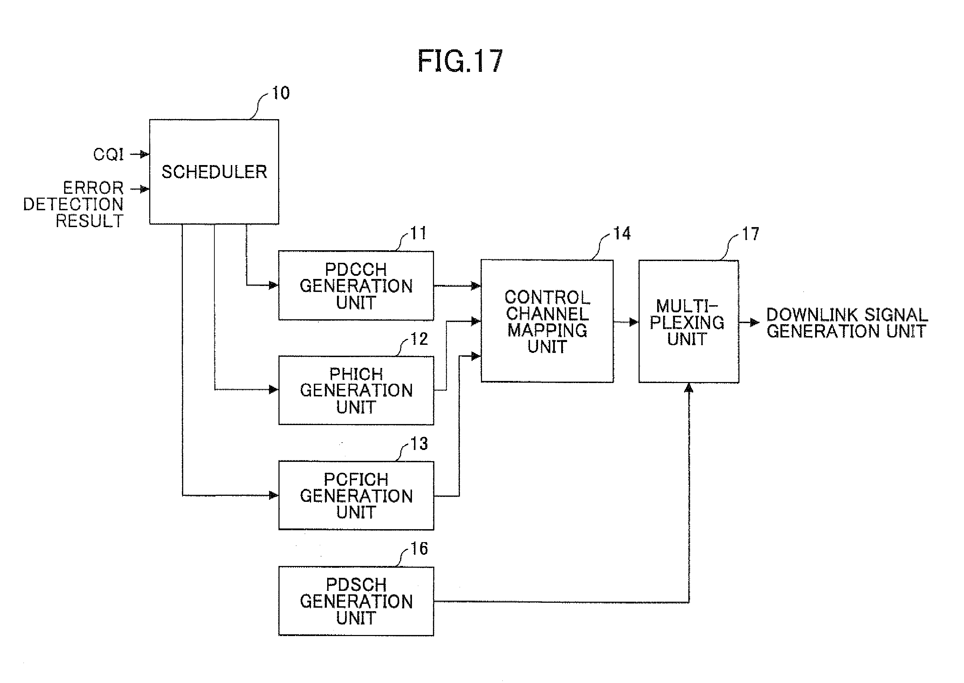

FIG. 17 is a functional block diagram partially illustrating a base station according to one embodiment of the present invention. In FIG. 17, a scheduler 10, a PDCCH generation unit 11, a PHICH generation unit 12, a PCFICH generation unit 13, a control channel mapping unit 14, a PDSCH generation unit 16 and a multiplexing unit 17 are illustrated.

The scheduler 10 performs scheduling to assign uplink and downlink radio resources. The scheduling is performed depending on radio transmission states and so on, and the radio transmission states are measured based on downlink CQIs reported from user apparatuses, a SINR measured in uplinks and so on. The quality of radio transmission states affects error detection results, and thus the error detection results may be additionally taken into account for the scheduling.

The PDCCH generation unit 11 generates PDCCHs including downlink scheduling information, uplink scheduling information and so on.

The PHICH generation unit 12 generates acknowledgement information to inform users transmitting PUSCH. The acknowledgement information is represented as a negative response (NACK) to request the users to retransmit the PUSCHs or a positive response (ACK) without requesting the retransmission of the PUSCHs. The respective user PHICHs are spread at a predefined spreading rate.

The PCFICH generation unit 13 indicates the number of OFDM symbols in a subframe occupied by the PDCCHs. The number of OFDM symbols is equal to 1, 2 or 3 and varies depending on the number of multiplexed users and/or others. (This corresponds to the above-mentioned PCFICH or CFI.)

The control channel mapping unit 14 maps control signals including the PDCCHs, the PHICHs and the PCFICH to appropriate times and frequencies. The PHICHs corresponding to a predefined number of users are code-multiplexed into the same subcarrier. The control channel mapping unit 14 identifies respective blind detection positions for users to derive the blind detection positions in accordance with a method described in conjunction with the above exemplary operations and maps control channels for the users depending on the blind detection positions. Note that the scheduler 10, the control channel mapping unit 14 or other functional elements may identify the blind detection positions.

The PDSCH generation unit 16 generates PUSCHs.

The multiplexing unit 17 multiplexes control channels and PDSCHs and supplies the multiplexed signals to a subsequent downlink signal generation unit (not shown). The downlink signal generation unit generates OFDM modulated transmission symbols. The multiplexing unit 17 also multiplexes reference signals as needed. An exemplary format of one subframe resulting from multiplexing various signals may be as illustrated in FIG. 3.

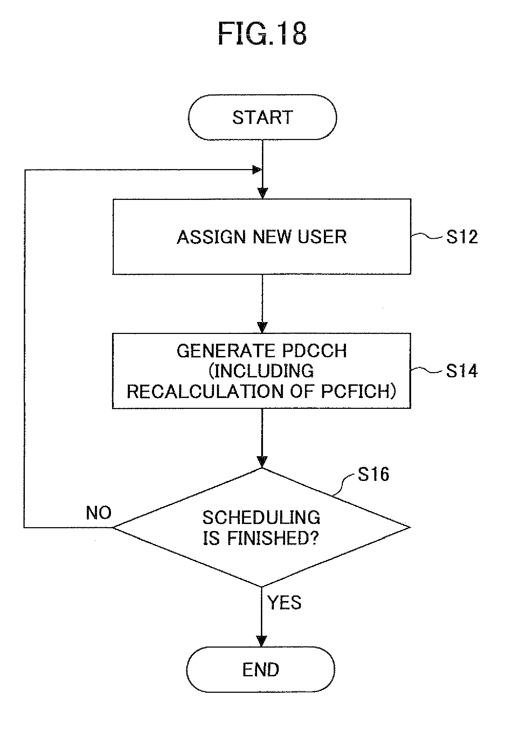

FIG. 18 is a flowchart illustrating an exemplary operation of the base station apparatus. At step S12, a shared data channel is scheduled. At step S14, a PDCCH including information for indicating the scheduled contents is generated. Depending on the number of multiplexed users, a PCFICH is determined. Based on the PCFICH, it can be determined how many first OFDM symbols are to be assigned. In addition, the blind detection start positions are determined for the users, and control signals (PDCCHs) are mapped to positions (CCEs) on or after the determined positions. At step S16, it is determined whether the scheduling has been finished for all the users, and if not, the flow returns to step S12, and if so, the flow ends.

[6. User apparatus (UE)]

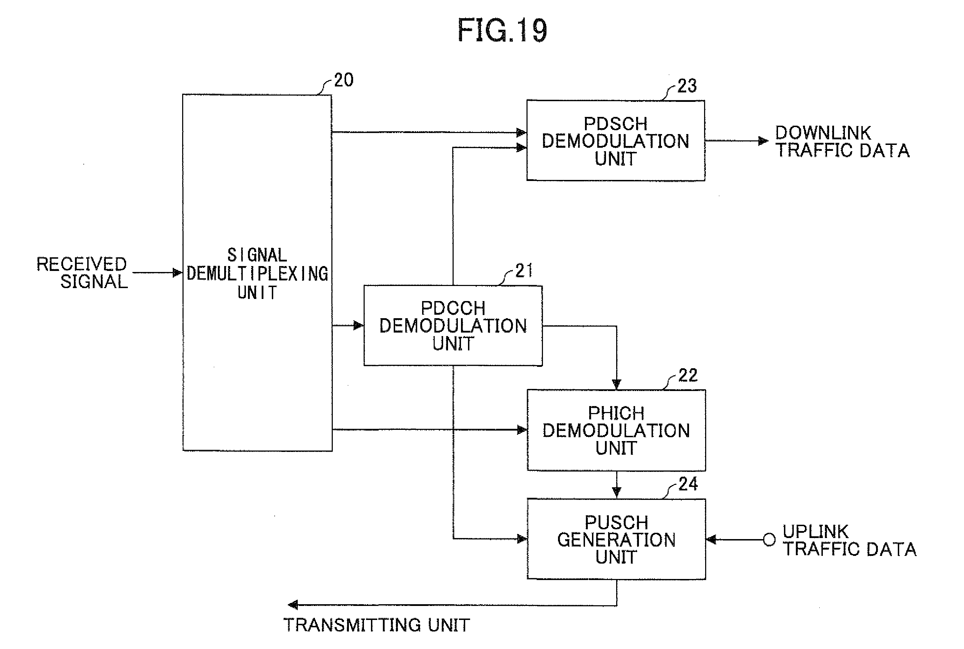

FIG. 19 is a functional block diagram partially illustrating a user apparatus according to one embodiment of the present invention. In FIG. 19, a signal demultiplexing unit 20, a PDCCH demodulation unit 21, a PHICH demodulation unit 22, a PDSCH demodulation unit 23 and a PUSCH generation unit 24 are illustrated.

The signal demultiplexing unit 20 demultiplexes a reference signal, a control channel, a PDSCH and so on from a received baseband signal appropriately.

The PDCCH demodulation unit 21 reads the PCFICH value to identify the number of OFDM symbols occupied by the PDCCH. The PDCCH demodulation unit 21 tries to demodulate the PDCCH to determine whether there is a PDCCH destined for the user apparatus itself. If the PDCCH destined for the user apparatus is present, the PDCCH demodulation unit 21 reads the PDCCH contents to identify radio resources available for the PUSCH and/or the PDSCH. When the PDCCH destined for the user apparatus is searched for, the blind detection is performed. The blind detection start position is determined in accordance with a method described in conjunction with the above exemplary operations. The user apparatus decodes a predefined number of CCEs following its own start position so that the control signal destined for the user apparatus can be decoded.

The PHICH demodulation unit 22 reads a PHICH associated with the user apparatus itself to determine whether to retransmit the PUSCH previously transmitted by the user apparatus.

The PDSCH demodulation unit 23 restores the PDSCH in accordance with the PDCCH. to generate downlink traffic data.

The PUSCH generation unit 24 generates a PUSCH in accordance with the PDCCH. If the retransmission is unnecessary, the PUSCH generation unit 24 generates a new packet (uplink traffic data) that has not been transmitted and transmits the packet to the transmitting unit. On the other hand, if the retransmission is necessary, the PUSCH generation unit 24 generates the packet to be retransmitted as the PUSCH again and transmits the packet to the transmitting unit.

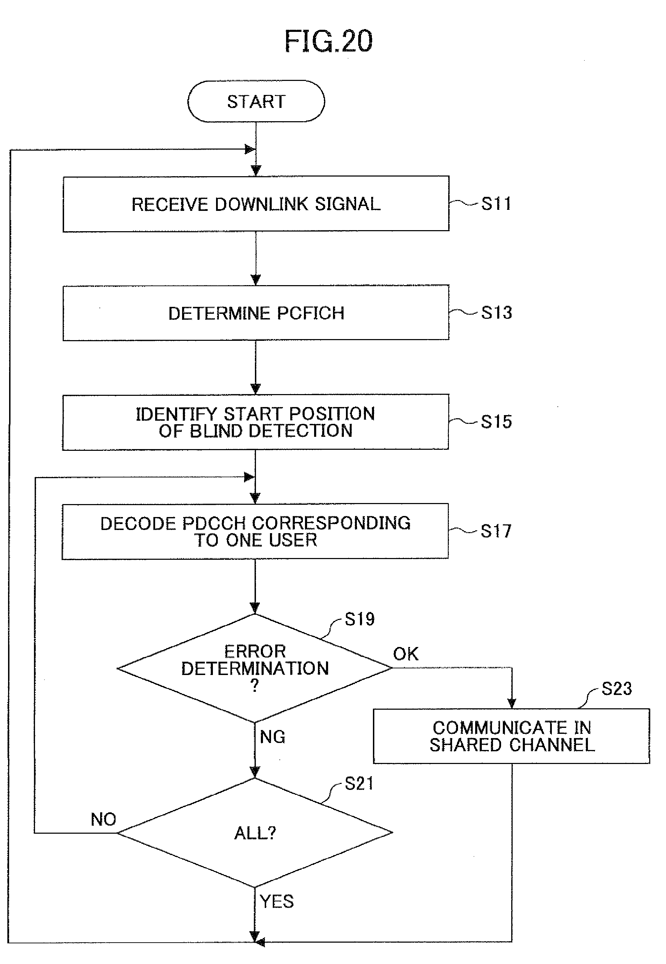

FIG. 20 is a flowchart illustrating an exemplary operation of the user apparatus. At step S11, the user apparatus receives a downlink signal. The received signal is converted into an appropriate baseband signal (received signal).

At step S13, the PCFICH (or CFI) is extracted from the received signal. The PCFICH value is detected to determine to how many first OFDM symbols in a subframe a control signal is mapped.

At step S15, the blind detection start position for the user apparatus is calculated. As described in conjunction with the above exemplary operations, the start position can be uniquely derived from identification information UE-ID of the user apparatus, a subframe number and the CFI (or PCFICH) value. Also, some information items such as the maximum number of multiplexed users may be separately transmitted, or the start position may be fixed in the system.

At step S17, PDCCH corresponding to one user are decoded. The PDCCH includes information (Z=X (XOR) Y) resulting from superimposition of UE-ID (Y) in CRC error detection bits (X). As one example, supposing that X=10010110 and Y=01111011, it holds that Z=11101101. Based on this relationship, the user apparatus uses its own UE-ID to try decoding, check the CRC error detection bits and determine whether the decoded information is destined for itself.

At step S19, if the error determination result indicates that the decoded information is not destined for itself, the flow proceeds to step S21.

At step S21, the user apparatus determines whether another PDCCH is to be decoded, and if so, the flow returns to step S17. If not, no control information destined for the user apparatus is in the subframe, and the flow returns to step S11 for processing the next subframe. The determination of the presence of another PDCCH to be decoded may be made based on whether the number of already decoded PDCCHs has reached the maximum number of multiplexed users.

At step S19, if the error determination result indicates that the decoded information is destined for the user apparatus, the flow proceeds to step S23. At step S23, a PDSCH is received and/or a PUSCH is transmitted based on the decoded scheduling information. Then, the flow returns to step S11 for processing the next subframe.

INDUSTRIAL APPLICABILITY

The present invention may be applied to any appropriate mobile communication system where radio resources are shared among users through scheduling. For example, the present invention may be applied to a HSDPA/HSUPA based W-CDMA system, a LTE based system, an IMT-Advanced system, a WiMAX based system, a Wi-Fi based system and so on.

The present invention has been described with reference to the specific embodiments, but the embodiments are simply illustrative and variations, modifications, alterations and substitutions could be contrived by those skilled in the art. In the above description, some specific numerical values are used for better understanding of the present invention. Unless specifically indicated, however, these numerical values are simply illustrative and any other suitable values may be used. Separation of the embodiments or items are not essential to the present invention, and descriptions in two or more embodiments or items may be combined as needed. For convenience of explanation, apparatuses according to the embodiments of the present invention have been described with reference to functional block diagrams, but these apparatuses may be implemented in hardware, software or combinations thereof. The present invention is not limited to the above embodiments, and variations, modifications, alterations and substitutions can be made by those skilled in the art without deviating from the spirit of the present invention.

This international patent application is based on Japanese Priority Application No. 2008-81844 filed on March 26, 2008, the entire contents of which are hereby incorporated by reference.

**Claims**

1. A base station apparatus in a mobile communication system where a downlink control signal resulting from user-by-user channel encoding is transmitted per transmission time interval unit, comprising:

   a control signal generation unit configured to channel-encode a signal including radio resource assignment information for a shared channel for each of users to generate respective downlink control signals for the users;
   a multiplexing unit configured to multiplex the respective downlink control signals depending on user blind detection positions to generate a downlink signal; and
   a transmitting unit configured to transmit the downlink signal,
   wherein
   multiple options of radio resource amounts per transmission time interval unit are provided for the downlink control signals,
   letting y be an integer value less than or equal to a multiple ($MB \times C_2/agg$) of a reference value being a ratio between a number of channel elements included in radio resources for the downlink control signals for a reference option and an aggregation level derived from a channel coding rate, the user blind detection positions for the reference option are derived from start positions resulting from a modulo operation of the y by an integer part of the reference value ($C_2/agg$), and
   for an upper option wherein more radio resources are provided than those for the reference option, the user blind detection positions are derived from start positions resulting from a modulo operation of the y by an integer part of a different reference value ($C_3/agg$) being a ratio between a number of channel elements for the upper option and the aggregation level.

2. The base station apparatus as claimed in claim 1, wherein the y is derived by performing a modulo operation of a value derived from user identification information, a subframe number and a predefined value by an integer part of the multiple of the reference value.

3. The base station apparatus as claimed in claim 1, wherein for a lower option wherein fewer radio resources are provided than those for the reference option, the user blind detection positions are derived from start positions resulting from a modulo operation of the y by an integer part of a further different reference value being a ratio between a number of channel elements for the lower option and the aggregation level.

4. The base station apparatus as claimed in claim 1, wherein for the upper option, the user blind detection positions are derived by adding a predefined offset value to the start positions resulting from the modulo operation of the y by the integer part of the different reference value being the ratio between the number of channel elements for the upper option and the aggregation level.

5. A method for use in a mobile communication system where a downlink control signal resulting from user-by-user channel encoding is transmitted per transmission time interval unit, comprising the steps of:

   channel-encoding a signal including radio resource assignment information for a shared channel for each of users to generate respective downlink control signals for the users;
   multiplexing the respective downlink control signals depending on user blind detection positions to generate a downlink signal; and
   transmitting the downlink signal,
   wherein
   multiple options of radio resource amounts per transmission time interval unit are provided for the downlink control signals,

letting y be an integer value less than or equal to a multiple of a reference value being a ratio between a number of channel elements included in radio resources for the downlink control signals for a reference option and an aggregation level derived from a channel coding rate, the user blind detection positions for the reference option are derived from start positions resulting from a modulo operation of the y by an integer part of the reference value, and

for an upper option wherein more radio resources are provided than those for the reference option, the user blind detection positions are derived from start positions resulting from a modulo operation of the y by an integer part of a different reference value being a ratio between a number of channel elements for the upper option and the aggregation level.

6. A base station apparatus in a mobile communication system where a downlink control signal resulting from user-by-user channel encoding is transmitted per transmission time interval unit, comprising:

a control signal generation unit configured to channel-encode a signal including radio resource assignment information for a shared channel for each of users to generate respective downlink control signals for the users;
a multiplexing unit configured to multiplex the respective downlink control signals depending on user blind detection positions to generate a downlink signal; and
a transmitting unit configured to transmit the downlink signal,
wherein
multiple options of radio resource amounts per transmission time interval unit are provided for the downlink control signals, and more radio resources are provided for a reference option than those for other options,
letting y be an integer value less than or equal to an integer part of a reference value ($C_3$/agg) being a ratio between a number of channel elements included in radio resources for the downlink control signals for the reference option and an aggregation level derived from a channel coding rate, the user blind detection positions for the reference option are derived from start positions obtained from the integer value less than or equal to the y, and
for a lower option wherein fewer radio resources are provided than those for the reference option, the user blind detection positions are derived from start positions resulting from a modulo operation of the start positions for the reference option by an integer part of a different reference value ($C_2$/agg) being a ratio between a number of channel elements for the lower option and the aggregation level.

7. The base station apparatus as claimed in claim 6, wherein the y is derived by performing a modulo operation of a value derived from user identification information, a subframe number and a predefined value by the integer part of the reference value.

8. The base station apparatus as claimed in claim 6, wherein for a different lower option wherein fewer radio resource are provided than those for the lower option, the user blind detection positions are derived from start positions resulting from a modulo operation of the start positions for the lower option by an integer part of a further different reference value being a ratio between a number of channel elements for the different lower option and the aggregation level.

9. The base station apparatus as claimed in claim 6, wherein for the lower option, the user blind detection positions are derived by adding a predefined offset value to the start positions resulting from the modulo operation of the y by the integer part of the different reference value being the ratio between the number of channel elements for the lower option and the aggregation level.

10. A method in a mobile communication system where a downlink control signal resulting from user-by-user channel encoding is transmitted per transmission time interval unit, comprising the steps of:

channel-encoding a signal including radio resource assignment information for a shared channel for each of users to generate respective downlink control signals for the users;
multiplexing the respective downlink control signals depending on user blind detection positions to generate a downlink signal; and
transmitting the downlink signal,
wherein
multiple options of radio resource amounts per transmission time interval unit are provided for the downlink control signals, and more radio resources are provided for a reference option than those for other options,
letting y be an integer value less than or equal to an integer part of a reference value ($C_3$/agg) being a ratio between a number of channel elements included in radio resources for the downlink control signals for the reference option and an aggregation level derived from a channel coding rate, the user blind detection positions for the reference option are derived from start positions obtained from the integer value less than or equal to the y, and

for a lower option wherein fewer radio resources are provided than those for the reference option, the user blind detection positions are derived from start positions resulting from a modulo operation of the start positions for the reference option by an integer part of a different reference value ($C_2$/agg) being a ratio between a number of channel elements for the lower option and the aggregation level.

**11.** A user apparatus in a mobile communication system where a downlink control signal resulting from user-by-user channel encoding is transmitted per transmission time interval unit, comprising:

a receiving unit configured to receive a downlink signal including the downlink control signal;
a control signal decoding unit configured to decode the downlink control signal depending on a user blind detection position for the user apparatus; and
a communication unit configured to communicate a shared channel depending on a decoding result, wherein

multiple options of radio resource amounts per transmission time interval unit are provided for the downlink control signals,

letting y be an integer value less than or equal to a multiple ($M_B \times C_2$/agg) of a reference value being a ratio between a number of channel elements included in radio resources for the downlink control signals for a reference option and an aggregation level derived from a channel coding rate, the user blind detection position for the reference option is derived from start positions resulting from a modulo operation of the y by an integer part of the reference value, and

for an upper option wherein more radio resources are provided than those for the reference option, the user blind detection position is derived from start positions resulting from a modulo operation of the y by an integer part of a different reference value ($C_3$/agg) being a ratio between a number of channel elements for the upper option and the aggregation level.

**12.** A method in a mobile communication system where a downlink control signal resulting from user-by-user channel encoding is transmitted per transmission time interval unit, comprising: the steps of:

receiving a downlink signal including the downlink control signal;
decoding the downlink control signal depending on a user blind detection position for a user apparatus; and
communicating a shared channel depending on a decoding result, wherein

multiple options of radio resource amounts per transmission time interval unit are provided for the downlink control signals,

letting y be an integer value less than or equal to a multiple ($M_B \times C_2$/agg) of a reference value being a ratio between a number of channel elements included in radio resources for the downlink control signals for a reference option and an aggregation level derived from a channel coding rate, the user blind detection position for the reference option is derived from start positions resulting from a modulo operation of the y by an integer part of the reference value, and

for an upper option wherein more radio resources are provided than those for the reference option, the user blind detection position is derived from start positions resulting from a modulo operation of the y by an integer part of a different reference value ($C_3$/agg) being a ratio between a number of channel elements for the upper option and the aggregation level.

**13.** A user apparatus in a mobile communication system where a downlink control signal resulting from user-by-user channel encoding is transmitted per transmission time interval unit, comprising:

a receiving unit configured to receive a downlink signal including the downlink control signal;
a control signal decoding unit configured to decode the downlink control signal depending on a user blind detection position for the user apparatus; and
a communication unit configured to communicate a shared channel depending on a decoding result, wherein

multiple options of radio resource amounts per transmission time interval unit are provided for the downlink control signals, and more radio resources are provided for a reference option than those for other options,

letting y be an integer value less than or equal to an integer part of a reference value ($C_3$/agg) being a ratio between a number of channel elements included in radio resources for the downlink control signals for the reference option and an aggregation level derived from a channel coding rate, the user blind detection position for the reference option is derived from start positions obtained from an integer value less than or equal to the y, and

for a lower option wherein fewer radio resources are provided than those for the reference option, the user blind detection position is derived from start positions resulting from a modulo operation of the start position for the reference option by an integer part of a different reference value ($C_2$/agg) being a ratio between a number of channel elements for the lower option and the aggregation level.

**14.** A method in a mobile communication system where a downlink control signal resulting from user-by-user channel encoding is transmitted per transmission time interval unit, comprising the steps of:

receiving a downlink signal including the downlink control signal;
decoding the downlink control signal depending on a user blind detection position for a user apparatus; and
communicating a shared channel depending on a decoding result,
wherein
multiple options of radio resource amounts per transmission time interval unit are provided for the downlink control signals, and more radio resources are provided for a reference option than those for other options,
letting y be an integer value less than or equal to an integer part of a reference value ($C_3$/agg) being a ratio between a number of channel elements included in radio resources for the downlink control signals for the reference option and an aggregation level derived from a channel coding rate, the user blind detection position for the reference option is derived from start positions obtained from an integer value less than or equal to the y, and

for a lower option wherein fewer radio resources are provided than those for the reference option, the user blind detection position is derived from start positions resulting from a modulo operation of the start position for the reference option by an integer part of a different reference value ($C_2$/agg) being a ratio between a number of channel elements for the lower option and the aggregation level.

# FIG.1

FREQUENCY

1 OFDM SYMBOL

1 RESOURCE BLOCK

#L

#L−1

#3

#2

#1

#1  #2  #3  #4  #5  #6  #7  #8  #9  #10  #11  #12  #13  #14

1 SUBFRAME (1ms)

TIME

FIG.2

PDCCH

EP 2 259 462 A1

# FIG.3

# FIG.4

| PDCCH#1 | PDCCH#2 | PDCCH#3 | PDCCH#4 |
|---------|---------|---------|---------|

# FIG.5

EP 2 259 462 A1

| R | R/2 | | |
|---|---|---|---|
| PDCCH#1 | PDCCH#2 | PDCCH#3 | PDCCH#4 |

# FIG.6

EP 2 259 462 A1

| CFI | NUMBER OF CCE | | | |
|---|---|---|---|---|
| | 1.4MHz | 5MHz | 10MHz | 20MHz |
| 1 | 1 | 5 | 11 | 22 |
| 2 | 3 | 13 | 27 | 55 |
| 3 | 5 | 22 | 44 | 88 |

# FIG.7

| CFI | NUMBER OF CCE | | | |
|---|---|---|---|---|
| | 1.4MHz | 5MHz | 10MHz | 20MHz |
| 1 | 1 | 5 | 11 | 22 |
| 2 | 2 | 11 | 21 | 44 |
| 3 | 4 | 19 | 38 | 77 |

EP 2 259 462 A1

# FIG.8

# FIG.9

K*x+L | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | ........

Start (CFI = 1) | 0 | 1 | 2 | 0 | 1 | 2 | 0 | 1 | 2 | 0 | 1 | 2 | 0 | 1 | 2 | 0 | 1 | 2 | 0 | 1 | 2 | 0 | 1 | 2 | 0 | 1 | ........

Start (CFI = 2) | 0 | 1 | 2 | 3 | 4 | 5 | 6 | 7 | 8 | 9 | 10 | 0 | 1 | 2 | 3 | 4 | 5 | 6 | 7 | 8 | 9 | 10 | 0 | 1 | 2 | 3 | ........

Start (CFI = 3) | 0 | 1 | 2 | 3 | 4 | 5 | 6 | 7 | 8 | 9 | 10 | 11 | 12 | 13 | 14 | 15 | 16 | 17 | 18 | 0 | 1 | 2 | 3 | 4 | 5 | 6 | ........

# of CCE: $(C_1, C_2, C_3) = (3, 11, 19)$

COLLISION

# FIG.10

EP 2 259 462 A1

FIG.11

$$C_3 < 2C_2$$

(CASE OF CFI = 3)

Start(3) → 0  1  2  3  4  5  6  7  8  9  10  11  12  13  14  15  16  17  18

| 0 | 1 | 2 | 3 | 4 | 5 | 6 | 7 | 8 | 9 | 10 | 11 | 12 | 13 | 14 | 15 | 16 | 17 | 18 |

(CASE OF CFI = 2)

Start(2) → 0  1  2  3  4  5  6  7  8  9  10

Start(3) {

| 0 | 1 | 2 | 3 | 4 | 5 | 6 | 7 | 8 | 9 | 10 |
| 11 | 12 | 13 | 14 | 15 | 16 | 17 | 18 | | | |

(CASE OF CFI = 1)

Start(1) → 0  1  2

Start(3) {

| 0 | 1 | 2 |
| 11 | 12 | 13 |
| 3 | 4 | 5 |
| 14 | 15 | 16 |
| 6 | 7 | 8 |
| 17 | 18 | |
| 9 | 10 | |

FIG.12

EP 2 259 462 A1

$C_3 > 2C_2$

(CASE OF CFI = 3)

Start(3) →

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|----|----|----|----|----|----|----|----|----|----|----|----|----|----|----|
| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | |

(CASE OF CFI = 2)

Start(2) → 0 1 2 3 4 5 6 7 8 9 10

Start(3)

| 0 | 1 | 2 | 3 | 4 | 5 | 6 | 7 | 8 | 9 | 10 |
|---|---|---|---|---|---|---|---|---|---|----|
| 11 | 12 | 13 | 14 | 15 | 16 | 17 | 18 | 19 | 20 | 21 |
| | | 22 | 23 | | | | | | | |

(SHIFT)

(CASE OF CFI = 1)

Start(1) → 0 1 2

Start(3)

| 0 | 1 | 2 |
|---|---|---|
| 11 | 12 | 13 |
| 3 | 4 | 5 |
| 14 | 15 | 16 |
| 22 | 23 | |
| 6 | 7 | 8 |
| 17 | 18 | 19 |
| 9 | 10 | |
| 20 | 21 | |

FIG.13

29

EP 2 259 462 A1

# FIG.14

$C_3 < 2C_2$

y { | 0 | 1 | 2 | 3 | 4 | 5 | 6 | 7 | 8 | 9 | 10 | 11 | 12 | 13 | 14 | 15 | 16 | 17 | 18 | 19 | 20 | 21 |
| 22 | 23 | 24 | 25 | 26 | 27 | 28 | 29 | 30 | 31 | 32 | 33 | 34 | 35 | 36 | 37 | 38 | 39 | 40 | 41 | 42 | 43 |

(CASE OF CFI = 3)

Start(3) → 0  1  2  3  4  5  6  7  8  9  10  11  12  13  14  15  16  17  18

y { | 0 | 1 | 2 | 3 | 4 | 5 | 6 | 7 | 8 | 9 | 10 | 11 | 12 | 13 | 14 | 15 | 16 | 17 | 18 |
| | | | | | | | | 19 | 20 | 21 | | | | | | | | |
| 22 | 23 | 24 | 25 | 26 | 27 | 28 | 29 | 30 | 31 | 32 | 33 | 34 | 35 | 36 | 37 | 38 | 39 | 40 |
| | | | | | | | | 41 | 42 | 43 | | | | | | | | |

(CASE OF CFI = 2)

Start(2) → 0  1  2  3  4  5  6  7  8  9  10

y { | 0 | 1 | 2 | 3 | 4 | 5 | 6 | 7 | 8 | 9 | 10 |
| 11 | 12 | 13 | 14 | 15 | 16 | 17 | 18 | 19 | 20 | 21 |
| 22 | 23 | 24 | 25 | 26 | 27 | 28 | 29 | 30 | 31 | 32 |
| 33 | 34 | 35 | 36 | 37 | 38 | 39 | 40 | 41 | 42 | 43 |

(CASE OF CFI = 1)

Start(1) → 0  1  2

y { | 0 | 1 | 2 |
| 11 | 12 | 13 |
| 22 | 23 | 24 |
| 33 | 34 | 35 |
| 3 | 4 | 5 |
| 14 | 15 | 16 |
| 25 | 26 | 27 |
| 36 | 37 | 38 |
| 6 | 7 | 8 |
| 17 | 18 | 19 |
| 28 | 29 | 30 |
| 39 | 40 | 41 |
| 9 | 10 | |
| 20 | 21 | |
| 31 | 32 | |
| 42 | 43 | |

FIG.15

EP 2 259 462 A1

$C_3 > 2C_2$

(CASE OF CFI = 3)
Start(3) →

(CASE OF CFI = 2)
Start(2) →

(CASE OF CFI = 1)
Start(1) →

FIG.16

# FIG.17

EP 2 259 462 A1

# FIG.18

```
        ┌─────────┐
        │  START  │
        └────┬────┘
             │
             ▼
    ┌─────────────────┐
    │ ASSIGN NEW USER │────── S12
    └────────┬────────┘
             │
             ▼
    ┌─────────────────────┐
    │   GENERATE PDCCH     │
    │    (INCLUDING        │────── S14
    │ RECALCULATION OF PCFICH) │
    └────────┬────────────┘
             │
             ▼          ～S16
           ◇─────────────────◇
      NO  ╱   SCHEDULING      ╲
    ◄─────   IS FINISHED?      
          ╲                   ╱
           ◇─────────────────◇
                  │ YES
                  ▼
             ┌─────────┐
             │   END   │
             └─────────┘
```

# FIG.19

EP 2 259 462 A1

# FIG.20

```
                    ┌─────────────┐
                    │    START    │
                    └──────┬──────┘
                           │
        ┌──────────────────┼──────────────────┐
        │                  ▼                   │
        │   ┌──────────────────────────────┐  │
        │   │   RECEIVE DOWNLINK SIGNAL     │──┼── S11
        │   └──────────────┬───────────────┘  │
        │                  ▼                   │
        │   ┌──────────────────────────────┐  │
        │   │       DETERMINE PCFICH        │──┼── S13
        │   └──────────────┬───────────────┘  │
        │                  ▼                   │
        │   ┌──────────────────────────────┐  │
        │   │   IDENTIFY START POSITION     │──┼── S15
        │   │     OF BLIND DETECTION        │  │
        │   └──────────────┬───────────────┘  │
        │                  ▼                   │
```

- RECEIVE DOWNLINK SIGNAL — S11
- DETERMINE PCFICH — S13
- IDENTIFY START POSITION OF BLIND DETECTION — S15
- DECODE PDCCH CORRESPONDING TO ONE USER — S17
- ERROR DETERMINATION ? — S19
  - OK → COMMUNICATE IN SHARED CHANNEL — S23
  - NG → ALL? — S21
    - NO
    - YES

<div align="center">

**INTERNATIONAL SEARCH REPORT**

</div>

| | International application No. |
|---|---|
| | PCT/JP2009/055075 |

**A. CLASSIFICATION OF SUBJECT MATTER**
*H04J11/00*(2006.01)i, *H04J1/00*(2006.01)i, *H04W72/04*(2009.01)i, *H04W72/12*
(2009.01)i

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched
| Jitsuyo Shinan Koho | 1922-1996 | Jitsuyo Shinan Toroku Koho | 1996-2009 |
|---|---|---|---|
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Ericsson, PDCCH blind decoding - Outcome of offline discussions, 3GPP TSG RAN WG1#52 R1-081101, 2008.02.15, full text | 1-14 |
| P,A | NTT DoCoMo, PDCCH Allocation Based on Hashing Function Generation Method for PDCCH Blind Decoding, 3GPP TSG RAN WG1 Meeting #52bis R1-081406, 2008.03.30, full text | 1-14 |
| P,A | Samsung, UE-specific search space, 3GPP TSG RAN WG1 Meeting #52bis R1-081212, 2008.03.26, full text | 1-14 |
| P,A | LG Electronics, Randomization Function for PDCCH search space, 3GPP TSG RAN WG1#52bis R1-081251, 2008.03.26, full text | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 April, 2009 (07.04.09) | 21 April, 2009 (21.04.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/055075 |

C (Continuation).  DOCUMENTS CONSIDERED TO BE RELEVANT

| Category* | Citation of document, with indication, where appropriate, of the relevant passages | Relevant to claim No. |
| --- | --- | --- |
| P,A | Nokia, Nokia Siemens Networks, PDCCH decoding complexity and associated hashing functions, 3GPP TSG RAN WG1 Meeting #52bis R1-081447, 2008.03.26, full text | 1-14 |
| P,A | Qualcomm Europe, Remaining issues on PDCCH search space definitions, 3GPP TSG RAN1 #52bis R1-081481, 2008.03.27, full text | 1-14 |
| P,A | Motorola, PDCCH Search Space Assignment Hashing Function, 3GPP TSG RAN1 #52bis R1-081289, 2008.03.27, full text | 1-14 |
| P,A | LG Electronics, Randomization Function for PDCCH search space, 3GPP TSG RAN WG1#52bis R1-081567, 2008.04.09, full text | 1-14 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008081844 A